# EUROPEAN PATENT APPLICATION

(11) **EP 4 841 766 A1**
(43) Date of publication of application: **18.11.2026**
(21) Application number: 25214404.3
(22) Date of filing: 07.11.2025
(51) Int. Cl.: H01M 50/209, H01M 50/317, H01M 50/35, H01M 50/367

(54) **BATTERY DEVICE, ENERGY STORAGE SYSTEM AND ELECTRIC EQUIPMENT**

(30) Priority: 14.05.2025 CN 202510617319
(71) Applicant: Zhejiang Jinko Energy Storage Co., Ltd., Jiaxing, Zhejiang (CN)
(72) Inventor: SHI, Yanyan, Jiaxing (CN); ZHANG, Luhua, Jiaxing (CN); LV, Yuanfu, Jiaxing (CN)
(74) Representative: Hautier IP - MC/EP

(57) **Abstract**

The present disclosure relates to a battery device, an energy storage system and electric equipment, and relates to the technical field of energy storage. The battery device includes at least one battery module. The battery module includes an electrical component, a cover plate, a plurality of cells and a cells contact system. Each of the cells is provided with an explosion-proof valve on the top. The cells contact system includes an insulation plate. One of the insulation plate and the cover plate is provided with a recessed channel, the other is provided with a protruding channel. The recessed channel is engaged with the protruding channel to enclose a pressure-relief channel. The insulation plate is provided with a plurality of through holes at intervals along a first direction. The pressure relief channel may play a role in reducing the risk of the high-temperature and high-pressure gas and the particles from discharged to the electrical component, and thus improving the electrical safety of the battery device.

## Description

### TECHNICAL FIELD

The present disclosure relates to the technical field of energy storage, and in particular, to a battery device, an energy storage system and an electric equipment.

### BACKGROUND

With the rapid development of new energy, the market has increasingly high requirements on the safety performance of energy storage systems. An energy storage system includes a battery device. The battery device includes a plurality of battery modules. The battery module includes a plurality of cells. Generally, an explosion-proof valve is provided at the top of each cell. When thermal runaway occurs in a certain cell, the explosion-proof valve corresponding to the cell will open and release pressure, so as to directly discharge high-temperature and high-pressure gas and particles from the cell.

### SUMMARY

A first aspect of the present disclosure provides a battery device. The battery device includes at least one battery module. The battery module includes an electrical component, a cover plate, a plurality of cells and a cells contact system. Each of the cells is provided with an explosion-proof valve on the top. The cells contact system includes an insulation plate. One of the insulation plate and the cover plate is provided with a recessed channel, the other is provided with a protruding channel. The recessed channel is engaged with the protruding channel to enclose a pressure-relief channel. The insulation plate is provided with a plurality of through holes at intervals along a first direction. The plurality of through holes are communicated with the pressure-relief channel.

In one or more embodiments, the plurality of through holes may cover the explosion-proof valve along a second direction. Along the first direction, one end of the pressure-relief channel is a closed end, another end of the pressure-relief channel is an open end, and the electrical component is located on a side of the closed end away from the open end.

In one or more embodiments, each cell is provided with an explosion-proof hole. The explosion-proof valve is provided at the explosion-proof hole. Along the first direction, the closed end of the pressure-relief channel is arranged on a side of the battery device provided with an electrical component, and the open end of the pressure-relief channel is arranged on a side of the battery device provided with no electrical component. When a certain cell experiences the thermal runaway, an explosion-proof valve corresponding to the cell is opened. Then the high-temperature and high-pressure gas and particles in the cell are instantly sprayed out of the explosion-proof valve and flow into a pressure-relief channel. Along the first direction, one end of the pressure-relief channel is configured to be a closed end, and the other end of the pressure-relief channel is configured to be an open end, thereby enabling the closed end to play a role in blocking the sprayed high-temperature and high-pressure gas and particles along the first direction, enabling the high-temperature and high-pressure gas and particles to flow towards the open end along the first direction and to be discharged out, further reducing the risk of the flushed high-temperature and high-pressure gas and particles being discharged to an electrical component close to the closed end, avoiding the risk of short circuit, failure and damage to the electrical component under the impact of the high-temperature and high-pressure gas and particles, thus reducing the risk of fire, explosion and the like in the battery device, and thus improving the electrical safety of the battery device.

In one or more embodiments, the cover plate is provided with the protruding channel. The insulation plate is provided with the recessed channel. The recessed channel includes a body and the through holes communicating with the body. Along the first direction, one end of the recessed channel is provided with a baffle wall, another end of the recessed channel penetrates through the insulation plate, one end of the protruding channel close to the baffle wall is closed, and anther end of the protruding channel penetrates through the cover plate.

In one or more embodiments, the protruding channel at least includes a first connecting portion, and an outer contour of the first connecting portion is arc-shaped, thereby enabling the first connecting portion to be clamped with the through hole.

In one or more embodiments, the protruding channel further includes a second connecting portion integrally formed with the first connecting portion. An outer contour of the second connecting portion matches an outer contour of the body, thereby enabling the second connecting portion to be clamped with the body.

In one or more embodiments, the insulation plate further comprises an insulation portion, the insulation portion is located in the through hole, and the insulation portion is configured to block particles from falling to top of the cell without thermal runaway.

In one or more embodiments, the insulation portion is a baffle. Along the first direction, the baffle includes a first end and a second end. The first end is located on a side of the second end facing the closed end. The first end is fixedly connected to an inner wall of the through hole. The second end is movably connected to the inner wall of the through hole.

In one or more embodiments, arc-shaped holes are distributed at intervals at a junction between the second end and the through hole.

In one or more embodiments, along the second direction, the baffle is obliquely arranged, thereby enabling the second end to be located on a side of the first end facing away from the explosion-proof valve.

In one or more embodiments, along the second direction, an included angle θ is formed between the first end and the second end, where 1°≤θ≤3°.

In one or more embodiments, the insulation portion is an insulation net, and the insulation net is connected to an inner wall of the through hole.

In one or more embodiments, wherein the body includes a Tesla valve protrusion along the first direction, so that gas and particles in the pressure-relief channel are discharged from the closed end toward the open end.

In one or more embodiments, along the second direction, a size of a recess of the recessed channel located at the body is H1, and a size of the Tesla valve protrusion is H2, and a ratio of H2 to H1 is in a range of 0.5≤H2/H1≤1.

In one or more embodiments, the Tesla valve protrusion abuts against the protrusion channel along the second direction.

In one or more embodiments, the insulation plate further includes a plurality of limiting portions distributed at intervals. The cover plate further includes a plurality of matching portions distributed at intervals. The matching portions may be matched with the limiting portions.

A second aspect of the present disclosure further provides an energy storage system including the above battery device.

A third aspect of the present disclosure further provides an electric equipment including the above battery device.

It should be understood that the general description above and the detailed description in the following are merely illustrative, and cannot limit the present disclosure.

### BRIEF DESCRIPTION OF DRAWINGS

FIG. 1 is a structural schematic diagram of a battery module according to one or more embodiments of the present disclosure;
FIG. 2 is an exploded view of the battery module shown in FIG. 1;
FIG. 3 is another structural schematic diagram of a battery module according to one or more embodiments of the present disclosure;
FIG. 4 is another structural schematic diagram of a battery module according to one or more embodiments of the present disclosure;
FIG. 5 is a structural schematic diagram of a cells contact system and a cell according to one or more embodiments of the present disclosure;
FIG. 6 is a structural schematic diagram of connection between a cover plate and an insulation plate according to one or more embodiments of the present disclosure;
FIG. 7 is another structural schematic diagram of a connection between a cover plate and an insulation plate according to one or more embodiments of the present disclosure;
FIG. 8 is a partial enlarged view of part B shown in FIG. 7;
FIG. 9 is a structural schematic diagram of a cover plate according to one or more embodiments of the present disclosure;
FIG. 10 is a structural schematic diagram of an insulation plate according to one or more embodiments of the present disclosure;
FIG. 11 is a schematic diagram of a partial structure of an insulation plate shown in FIG. 10 according to one or more embodiments of the present disclosure;
FIG. 12 is a sectional view of connection between a cover plate and an insulation plate according to one or more embodiments of the present disclosure;
FIG. 13 is a partial enlarged view of a partial structure of an insulation plate according to one or more embodiments of the present disclosure;
FIG. 14 is a partial enlarged view of a partial structure of an insulation plate according to one or more embodiments of the present disclosure;
FIG. 15 is an operating principle diagram of a Tesla valve protrusion according to one or more embodiments of the present disclosure, which can used to guide gas and particles to be discharged toward the open end;
FIG. 16 is an operating principle diagram of a Tesla valve protrusion according to one or more embodiments of the present disclosure, which cannot be used to guide gas and particles to be discharged toward the closed end;
FIG. 17 is a partial enlarged view of part A shown in FIG. 4; and
FIG. 18 is a partial sectional enlarged view of a partial structure of an insulation plate according to one or more embodiments of the present disclosure.

### Reference signs:

1- battery module;
   11 - cover plate;
      111 - protruding channel;
         111a - first connecting portion;
         111b - second connecting portion;
      112 - matching portion;
   12 - cell;
   13 - cells contact system;
      131 - insulation plate;
      1311 - recessed channel;
         1311a - through hole;
         1311b - body;
         1311c - baffle wall;
         1311d - Tesla valve protrusion;
      1312 - baffle;
         1312a - first end;
         1312b - second end;
         1312c - arc hole;
      1313 - limiting portion;
      1314 - insulation net;
      1315 - wiring portion;
14 - pressure-relief channel;
   141 - closed end;
   142 - open end;
15 - explosion-proof valve;
16 - low-voltage connector.

The drawings are incorporated in and constitute a part of the description, which illustrate embodiments in accordance with the present disclosure and, together with the description, serve to explain the principles of the present disclosure.

### DESCRIPTION OF EMBODIMENTS

In order to better understand the technical solutions of the present disclosure, embodiments of the present disclosure are described in detail below in conjunction with the drawings.

The present disclosure will be described in detail as follows with reference to the accompanying drawings.

It should be noted that the described embodiments are only some rather than all of embodiments of the present disclosure.

The terms used in embodiments of the present disclosure are only for the purpose of describing specific embodiments, and are not intended to limit the present disclosure. The terms "a", "an", "the" and "said" in a singular form in embodiments of the present disclosure and the attached claims are also intended to include plural forms thereof, unless explicitly noted otherwise in the context.

It should be understood that the term "and/or" used in the context of the present disclosure is to describe a correlation relation of related objects, indicating that there can be three relations, e.g., A and/or B can indicate only A, both A and B, and only B. In addition, the symbol "/" in the context generally indicates that the relation between the objects in front and at the back of "/" is an "or" relationship.

It should be noted that location terms such as "on/above", "below/under", "left", and "right" described in embodiments of the present disclosure are described with reference to the angles shown in the drawings, and should not be construed as limitations on embodiments of the present disclosure. In addition, in the context, it should be understood that when one element is referred to as being formed "on/above" or "below/under" another element, it is possible that the one element may be directly formed "on/above" or "below/under" another element, or formed "on/above" or "below/under" another element via an intermediate element.

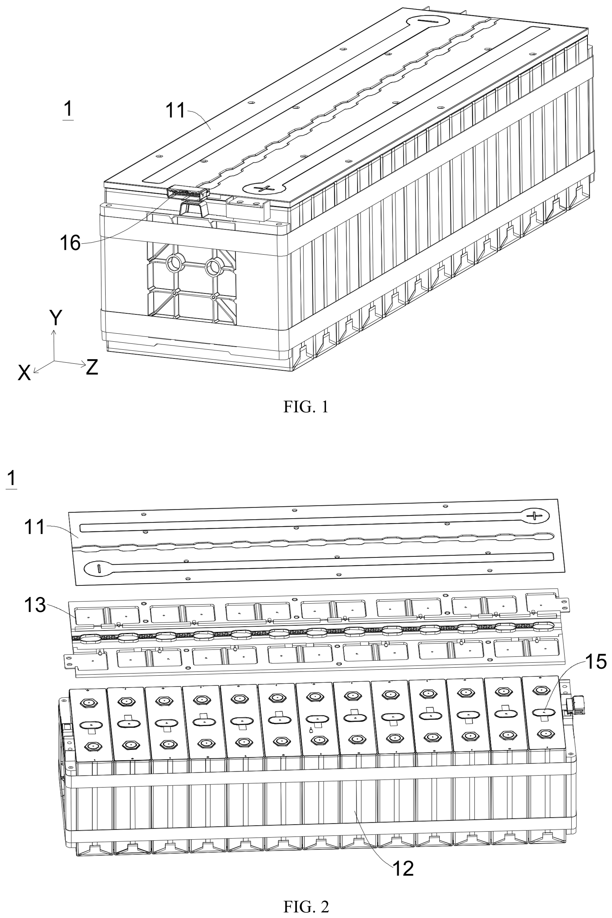

Some embodiments of the present disclosure provide a battery device. As shown in FIG. 1 to FIG. 12, the battery device includes at least one battery module 1. The battery module 1 includes an electrical component, a cover plate 11, a plurality of cells 12, and a cells contact system 13. Each of the cells 12 is provided with an explosion-proof valve 15 on the top. The cells contact system 13 includes an insulation plate 131. One of the insulation plate 131 and the cover plate 11 is provided with a recessed channel 1311, the other is provided with a protruding channel 111. The recessed channel 1311 is engaged with the protruding channel 111 to enclose a pressure-relief channel 14. The insulation plate 131 is provided with a plurality of through holes 1311a at intervals along a first direction X. The through holes 1311a communicate with the pressure-relief channel 14. The through holes 1311a may cover the explosion-proof valves 15 along a second direction Y.

Along the first direction X, one end of the pressure-relief channel 14 is a closed end 141, the other end of the pressure-relief channel 14 is an open end 142. The electrical component is located on a side of the closed end 141 away from the open end 142.

In some embodiments, each cell 12 is provided with an explosion-proof hole. The explosion-proof valve 15 is disposed at the explosion-proof hole. Along the first direction X, the closed end 141 of the pressure-relief channel 14 is disposed on a side of the battery device provided with an electrical component, and the open end 142 of the pressure-relief channel 14 is disposed on a side of the battery device not provided with any electrical component. When a certain cell 12 experiences the thermal runaway, an explosion-proof valve 15 corresponding to the cell 12 is opened. Then the high-temperature and high-pressure gas and particles in the cell 12 are instantly sprayed out of the explosion-proof valve 15 and flow into a pressure-relief channel 14. Along the first direction X, one end of the pressure-relief channel 14 is configured to be a closed end 141, and the other end of the pressure-relief channel 14 is configured to be an open end 142, thereby enabling the closed end 141 to play a role in blocking the sprayed high-temperature and high-pressure gas and particles along the first direction X, enabling the high-temperature and high-pressure gas and particles to flow towards the open end 142 along the first direction X and to be discharged out, further reducing the risk of the high-temperature and high-pressure gas and particles being discharged to an electrical component close to the closed end 141, avoiding the risk of short circuit, failure and damage to the electrical component under the impact of the high-temperature and high-pressure gas and particles, thus reducing the risk of fire, explosion and the like in the battery device, and improving the electrical safety of the battery device.

In some embodiments, the first direction X, the second direction Y, and the third direction Z mentioned herein may refer to the embodiments shown in FIG. 1, where the first direction X may be a length direction of the battery device, the second direction Y may be a height direction of the battery device, and the third direction Z may be a width direction of the battery device. Therefore, the first direction X, the second direction Y, and the third direction Z are perpendicular to each other.

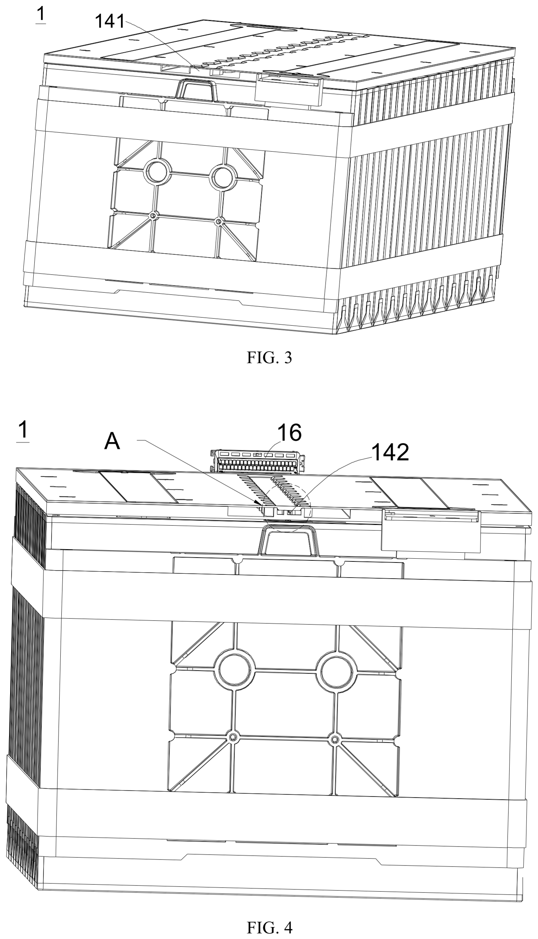

As shown in FIG. 1 and FIG. 4, the electrical component may be a low-voltage connector 16, which is mainly configured to ensure communication and power transmission between a battery management system (BMS) and another electronic control unit in the battery device. Therefore, because the battery management system (not shown in the drawings) is generally provided on a side of the battery device close to the low-voltage connector 16 along the first direction X, and the closed end 141 is provided on a side of the battery device facing the low-voltage connector 16 along the first direction X through the pressure-relief channel 14. As a result, it is also beneficial to reducing the risk of contact between the high-temperature and high-pressure gas and the particles and other electrical components such as the BMS, further reducing risks such as fire and explosion, and further improving the electrical safety of the battery device.

In addition, one of the insulation plate 131 and the cover plate 11 of the cells contact system 13 is provided with a recessed channel 1311, the other is provided with a protruding channel 111. The recessed channel 1311 is engaged with the protruding channel 111 to enclose a pressure-relief channel 14, thereby enabling high-temperature and high-pressure gas and particles to be discharged along the pressure-relief channel 14, and thus improving the reliability and safety of pressure relief and exhaust of the battery device. Additionally, the recessed channel 1311 and the protruding channel 111 are integrated on the insulation plate 131 or the cover plate 11, which is beneficial to optimizing the spatial arrangement in the battery device. In addition, the recessed channel 1311 is engaged with the protruding channel 111, which is beneficial to improving the connection reliability and firmness between the insulation plate 131 and the cover plate 11, reducing the risk of the cover plate 11 from being flushed by the high-temperature and high-pressure gas and the particles ejected when opening the valve, and further improving the feasibility and reliability of pressure relief of the battery device.

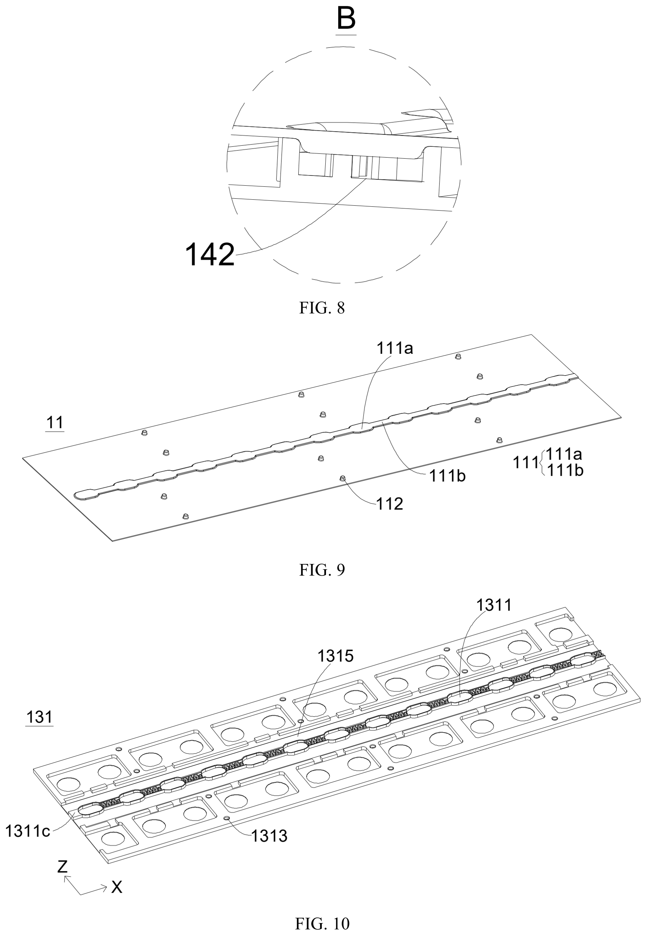

In one or more embodiments, as shown in FIG. 9 to FIG. 11, the cover plate 11 is provided with a protruding channel 111, and the insulation plate 131 is provided with a recessed channel 1311. The recessed channel 1311 includes a body 1311b and a through hole 1311a communicating with the body 1311b. Along the first direction X, one end of the recessed channel 1311 is provided with a baffle wall 1311c, the other end of the recessed channel 1311 penetrates through the insulation plate 131, one end of the protruding channel 111 close to the baffle wall 1311c is closed, and the other end of the protruding channel 111 penetrates through the cover plate 11.

In some embodiments, along the first direction X, one end of the recessed channel 1311 close to the electrical component is provided with a baffle wall 1311c. The baffle wall 1311c can insulate the high-temperature and high-pressure gas and particles in the pressure-relief channel 14, thereby reducing the risk of contact between the high-temperature and high-pressure gas and particles and the electrical component, reducing the risk of short-circuit, damage, fire or even explosion of the electrical component caused by the high-temperature or impact, improving the use safety of the electrical component, and further improving the operating stability and reliability of the battery device.

In one or more embodiments, as shown in FIG. 9 to FIG. 11, the protruding channel 111 at least includes a first connecting portion 111a. An outer contour of the first connecting portion 111a is arc-shaped, enabling the first connecting portion 111a to be clamped with the through hole 1311a.

In some embodiments, along the second direction Y, the first connecting portion 111a protrudes toward the through hole 1311a, enabling the first connecting portion 111a to be clamped with the through hole 1311a. Since the high-temperature and high-pressure gas and the particles in the cell 12 enter the pressure-relief channel 14 from the through hole 1311a, when opening the valve, the first connecting portion 111a located above the through hole 1311a is subjected to a relatively large impact force. The first connecting portion 111a is clamped with the through hole 1311a, so as to reduce the risk of separation of the first connecting portion 111a from the insulation plate 131 and the cover plate 11 due to the impact of the high-temperature and high-pressure gas and particles, thereby further improving the reliability of the high-temperature and high-pressure gas and the particles being discharged along the pressure-relief channel 14.

In one or more embodiments, as shown in FIG. 9 to FIG. 11, the protruding channel 111 further includes a second connecting portion 111b integrally formed with the first connecting portion 111a. An outer contour of the second connecting portion 111b matches an outer contour of the body 1311b, thereby enabling the second connecting portion 111b to be clamped with the body 1311b.

In some embodiments, along the second direction Y, the second connecting portion 111b protrudes toward the body 1311b, enabling the second connecting portion 111b to be clamped with the body 1311b. On the basis that the first connecting portion 111a is clamped with the through hole 1311a, the second connecting portion 111b is clamped with the body 1311b, which is beneficial to further improving the firmness and stability of the cover plate 11 and the insulation plate 131 enclosing the pressure-relief channel 14, and is further beneficial to improving the structural strength of the pressure-relief channel 14.

In one or more embodiments, as shown in FIG. 10, the insulation plate 131 may further include a wiring portion 1315 and an acquisition wire harness. The acquisition wire harness is configured to be electrically connected to the low-voltage connector 16. The acquisition wire harness is arranged on the wiring portion 1315. The wiring is located on both sides of the recessed channel 1311 along the third direction Z. The first connecting portion 111a is clamped with the body 1311b through the first connecting portion 111a and the through hole 1311a, and the second connecting portion 111b is clamped with the body 1311b, thereby enabling the inner wall of the enclosed pressure-relief channel 14 to insulate the acquisition wire harness from the high-temperature and high-pressure gas and particles, avoiding the risk of the high-temperature and high-pressure gas and particles leaking out along other directions except the first direction X, thus reducing the risks of damage, short-circuit, fire and the like generated by the acquisition wire harness, and thereby improving the electrical safety of the battery device.

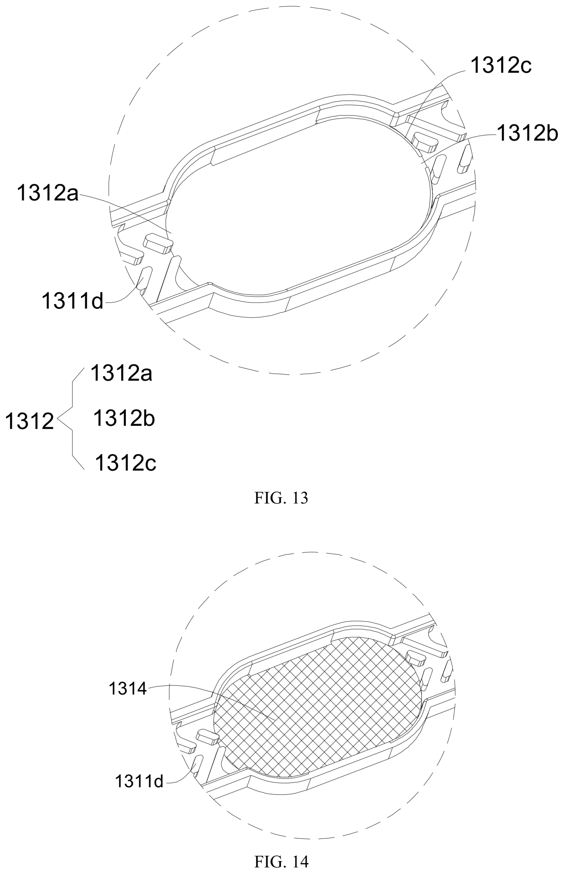

In one or more embodiments, as shown in FIG. 13 and FIG. 14, the insulation plate 131 further includes an insulation portion located at the through hole 1311a. The insulation portion is configured to block particles from falling to the top of the cell 12 without the thermal runaway. That is, the insulation portion is configured to block particles from falling to the top of the cell 12 corresponding to the unopened explosion-proof valve 15.

When a certain cell 12 experiences the thermal runaway, during the process of pressure relief and exhaust, the insulation portions corresponding to the remaining cells 12 without thermal runaway may be configured to block particles, thereby reducing the risk of the particles falling to the explosion-proof valve 15 corresponding to the remaining cell 12 without thermal runaway, further avoiding the remaining cell 12 without thermal runaway from opening the valve, and thus improving the safety of the battery device. Additionally, the risk of the particles falling onto the remaining cells 12 without thermal runaway and causing the short-circuit may also be reduced.

In one or more embodiments, as shown in FIG. 13, the insulation portion is a baffle 1312. Along the first direction X, the baffle 1312 includes a first end 1312a and a second end 1312b. The first end 1312a is located on a side of the second end 1312b facing the closed end 141. The first end 1312a is fixedly connected to an inner wall of the through hole 1311a. The second end 1312b is movably connected to the inner wall of the through hole 1311a.

In some embodiments, when a certain cell 12 experiences the thermal runaway, the high-temperature and high-pressure gas and the particles are accumulated under the baffle 1312 corresponding to the cell 12. Since the first end 1312a is fixedly connected to the inner wall of the through hole 1311a, and the second end 1312b is movably connected to the inner wall of the through hole 1311a. That is, the first end 1312a may not be separated from the through hole 1311a, and under the impact effect of the high-temperature and high-pressure gas and the particles, the second end 1312b moves and separates relative to the through hole 1311a, enabling the high-temperature and high-pressure gas and the particles to be smoothly flowed into the pressure-relief channel 14 through a gap between the second end 1312b and the through hole 1311a.

Therefore, along the first direction X, the second end 1312b is closer to the open end 142 of the pressure-relief channel 14 than the first end 1312a, thereby enabling the high-temperature and high-pressure gas and the particles to flow into the pressure-relief channel 14 from the structure of the side of the through hole 1311a closer to the open end 142. That is, the baffle 1312 is beneficial to guide the high-temperature and high-pressure gas and the particles to be discharged towards the open end 142 along the first direction X, and additionally, the high-temperature and high-pressure gas and the particles may more quickly release pressure and exhaust gas towards the open end 142 along the first direction X, thereby improving the electrical safety of the battery device. Additionally, during the process of pressure relief and exhaust, the baffle 1312 corresponding to the remaining cells 12 without thermal runaway can also be configured to block the particles from falling to the corresponding explosion-proof valve 15.

In one or more embodiments, as shown in FIG. 13, at least two arc-shaped holes 1312c distributed at intervals are provided at the junction between the second end 1312b and the through hole 1311a. That is, the second end 1312b and the through hole 1311a are connected in a micro-disconnection manner, thereby enabling the second end 1312b of the baffle 1312 to be separated from the through hole 1311a under the impact of high-temperature and high-pressure gas and particles, improving the reliability and feasibility of separating the baffle 1312 from the through hole 1311a, while accelerating the pressure relief and exhaust of the battery device.

In one or more embodiments, the baffle 1312 may be integrally formed on the insulation plate 131.

A size of a circumference of the baffle 1312 is S1, and a total length of all the arc-shaped holes 1312c provided at the second end 1312b along a circumferential direction of the baffle 1312 is S2. A ratio of S1 to S2 is in a range of 0.1≤S2/S1≤0.4. In some embodiments, S2/S1 may be 0.1, 0.2, 0.3, 0.4, or the like.

When 0.1≤S2/S1≤0.4, it is beneficial to improving the feasibility and reliability of the high-temperature and high-pressure gas and particles to break the connection between the second end 1312b of the baffle 1312 and the through hole 1311a. Additionally, when the high-temperature and high-pressure gas and the particles flow along the first direction X through the baffle 1312 corresponding to the remaining cells 12 without thermal runaway, the risk of separating the baffle 1312 from the through hole 1311a under the flowing action of the high-temperature and high-pressure gas and the particles is reduced, thereby effectively reducing the risk of opening of the valve of the remaining cells 12 without thermal runaway.

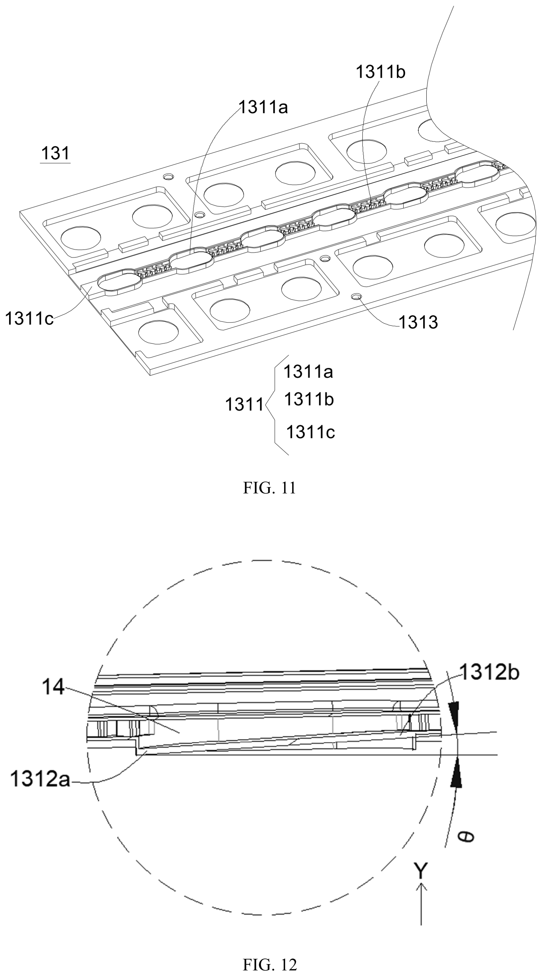

In one or more embodiments, as shown in FIG. 12, along the second direction Y, the baffle 1312 is obliquely disposed, enabling the second end 1312b to be located on a side of the first end 1312a away from the explosion-proof valve 15.

In some embodiments, when opening the valve, the high-temperature and high-pressure gas and particles are sprayed toward the cover plate 11 along the second direction Y, that is, flow upward. The baffle 1312 is obliquely disposed and the second end 1312b is located on a side of the first end 1312a away from the explosion-proof valve 15, that is, the second end 1312b is higher than the first end 1312a, it is beneficial to guiding the high-temperature and high-pressure gas and the particles to flow from the first end 1312a toward the second end 1312b along the first direction X, that is, guiding the high-temperature and high-pressure gas and the particles to flow toward the opening end 142, and enabling the high-temperature and high-pressure gas and the particles to accumulate at a position of the baffle 1312 close to the second end 1312b, and enabling the second end 1312b to be separated from the through hole 1311a, thereby making the high-temperature and high-pressure gas and the particles to smoothly flow into the pressure-relief channel 14, and thus further improving the speed of accelerating the pressure relief and discharge of the high-temperature and high-pressure gas and particles toward the opening end 142.

In one or more embodiments, as shown in FIG. 12, along the second direction Y, there is an included angle θ between the first end 1312a and the second end 1312b, which is in a range of 1°≤θ≤3°. In some embodiments, θ may be 1°, 1.1°, 1.2°, 1.3°, 1.4°, 1.5°, 1.6°, 1.7°, 1.8°, 1.9°, 2°, 2.1 °, 2.2°, 2.3°, 2.4°, 2.5°, 2.6°, 2.7°, 2.8,° 2.9°, 3°, or the like.

When the included angle θ is in a range of 1°≤θ≤3, the inclined angle of the baffle 1312 is proper, which is beneficial to improving the effect of the baffle 1312 guiding the high-temperature and high-pressure gas and the particles to flow along the first direction X toward the side of the open end 142, and enabling the high-temperature and high-pressure gas and the particles to be smoothly depressurized and discharged along the pressure-relief channel 14, and additionally, making the thickness of the insulation plate 131 to be controlled in a proper range, and thus properly improving the spatial arrangement rate of the battery device along the second direction Y.

In one or more embodiments, as shown in FIG. 14, the insulation portion is an insulation net 1314, which is connected to an inner wall of the through hole 1311a.

In some embodiments, the insulation net 1314 is similar to a woven net structure, and is fixedly connected to the inner wall of the through hole 1311a. When a certain cell 12 experiences the thermal runaway, during the process of pressure relief and exhaust, the insulation nets 1314 corresponding to the remaining cells 12 without thermal runaway may be configured to block particles with a larger size, thereby reducing the risk of the particles with a larger size falling to the explosion-proof valve 15 corresponding to the remaining cell 12 without thermal runaway, further reducing the risk of the remaining cell 12 without thermal runaway from opening the valve, and thus improving the safety of the battery device.

In one or more embodiments, as shown in FIG. 14, the insulation net 1314 may have an elastic deformation capability. When opening the valve, the insulation net 1314 can be configured to buffer the sprayed high-temperature and high-pressure gas and particles, which is beneficial to reducing the impact effect on the cover plate 11, further reducing the risk of the cover plate 11 from being separated from the insulation plate 131, improving the firmness and stability of the pressure-relief channel 14 formed by clamping the cover plate 11 and the insulation plate 131, and further improving the reliability and stability of achieving one-way pressure relief and exhaust of the battery device along the first direction X.

In one or more embodiments, a heat absorption layer (not shown in the drawings) may be embedded into a side wall of the pressure-relief channel 14, and is configured to absorb heat of the high-temperature and high-pressure gas and the particles, thereby reducing temperatures of the high-temperature and high-pressure gas and the particles, shrinking volumes of the high-temperature and high-pressure gas and the particles, and reducing viscosities of the high-temperature and high-pressure gas and the particles, further improving a flow rate of the high-temperature and high-pressure gas and the particles along the first direction X toward the opening end 142, enabling part of heat energy of the high-temperature and high-pressure gas and the particles to be effectively converted into kinetic energy, and thus achieving the rapid pressure relief and exhaust. In addition, the heat absorption layer is embedded in the side wall of the pressure-relief channel 14, which avoids chemical reaction between the heat absorption layer and the high-temperature and high-pressure gas and particles, and further improving the safety of the battery device.

The material of the heat absorption layer may be a paraffin composite material or a metal alloy material with good heat absorption, or other such materials. The material of the heat absorption layer is not limited in embodiments of the present disclosure, as long as the heat of the high-temperature and high-pressure gas and particles may be effectively absorbed and the safety of the battery device may be ensured.

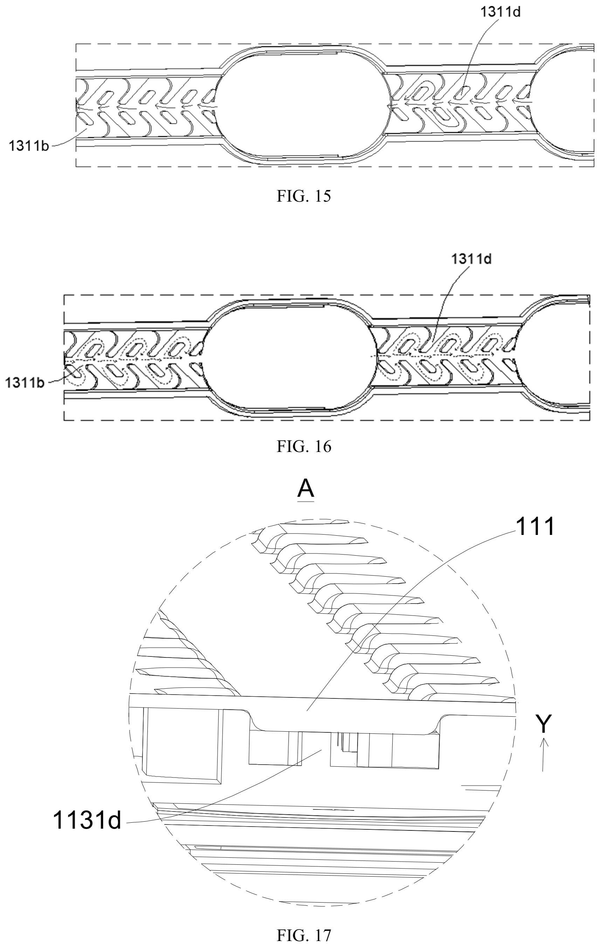

In one or more embodiments, as shown in FIG. 15, the body 1311b includes a Tesla valve protrusion 1311d along the first direction X, enabling gas and particles in the pressure-relief channel 14 to be discharged from the closed end 141 toward the open end 142.

In some embodiments, the body 1311b is provided with a protrusion structure arranged according to the Tesla valve, that is, the above Tesla valve protrusion 1311d. The Tesla valve protrusion 1311d is configured to guide the high-temperature and high-pressure gas and particles to flow toward the side of the open end 142 along the first direction X, thereby accelerating the rate of discharging the high-temperature and high-pressure gas and particles from the open end 142, reducing the risk of fire and explosion, and thus improving the electrical safety of the battery device.

It should be noted that the Tesla valve is a valve that uses a fixed space structure and allows fluid to flow uni-directionally without any mechanical movement. The principle of the Tesla valve is as follows. When the fluid or gas flows in a forward direction, the fluid or gas flows forward unobstructed, resulting in relatively low overall pressure loss. When the fluid or gas flows in a reverse direction, the fluid or gas is repeatedly blocked, split, and reversed, which prevents the fluid or gas from continuing to flow in the reverse direction. Then the outlet pressure is close to the atmospheric pressure, and the driving force for fluid flow almost disappears, thereby basically preventing the reverse flow.

In some embodiments, the flow direction of the high-temperature and high-pressure gas and particles from the closed end 141 toward the open end 142 along the first direction X is a forward direction, and the opposite is a reverse direction. As shown in FIG. 15, when the high-temperature and high-pressure gas and the particles pass through the Tesla valve in the forward direction (the arrows with solid line in FIG. 15 is the forward flow paths of the high-temperature and high-pressure gas and the particles), the fluid may be divided into two paths at each intersection, and then the two paths of fluid may be converged at the next intersection, and the flow directions of the two paths of fluid are substantially the same, thereby achieving acceleration. On the contrary, as shown in FIG. 16, if the fluid flows reversely into the Tesla valve (the arrows with dashed line in FIG. 16 are reverse flow paths of the high-temperature and high-pressure gas and particles), the fluid may also be divided into two paths at the intersection and converged again at the next intersection, and the flow directions of the two paths of fluid are counteracting (it can be seen in FIG. 16 that the flow directions of the red dashed line segments and the black dashed line segments are counteracting), thus creating significant resistance. Therefore, the Tesla valve can only allow forward flow and forbid reverse flow.

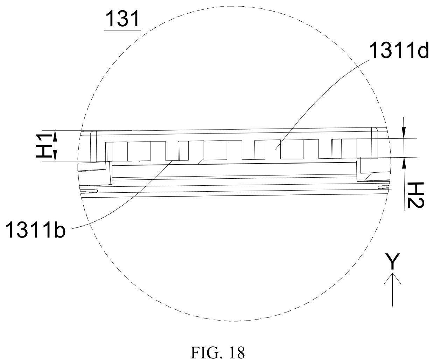

In one or more embodiments, as shown in FIG. 18, along the second direction Y, a size of the recess of the recessed channel 1311 at the body 1311b is H1, and a size of the Tesla valve protrusion 1311d is H2, which is in a range of 0.5≤H2/H1≤1. In some embodiments, H2/H1 may be 0.5, 0.6, 0.7, 0.8, 0.9, 1, or the like.

When the ratio of H2 to H1 is in the range of 0.5≤H2/H1≤1, along the second direction Y, the size of the Tesla valve protrusion 1311d is properly designed relative to the size of the recess of the recessed channel 1311 located at the body 1311b, which improves the feasibility and reliability of the Tesla valve protrusion 1311d for one-way flow guidance and accelerating the pressure relief and exhaust of high-temperature and high-pressure gas and particles from the opening end 142, and improves the reliability and firmness of the engagement between the second connection portion 111b and the body 1311b, thereby improving the reliability and firmness of the connection between the cover plate 11 and the insulation plate 131.

In one or more embodiments, as shown in FIG. 17, the Tesla valve protrusion 1311d abuts against the protrusion channel 111 along the second direction Y, so as to restrict the high-temperature and high-pressure gas and particles from being transmitted along the second direction Y, and guide the sprayed high-temperature and high-pressure gas and particles to flow along the forward direction toward the side provided with the Tesla valve protrusion 1311d when opening the valve.

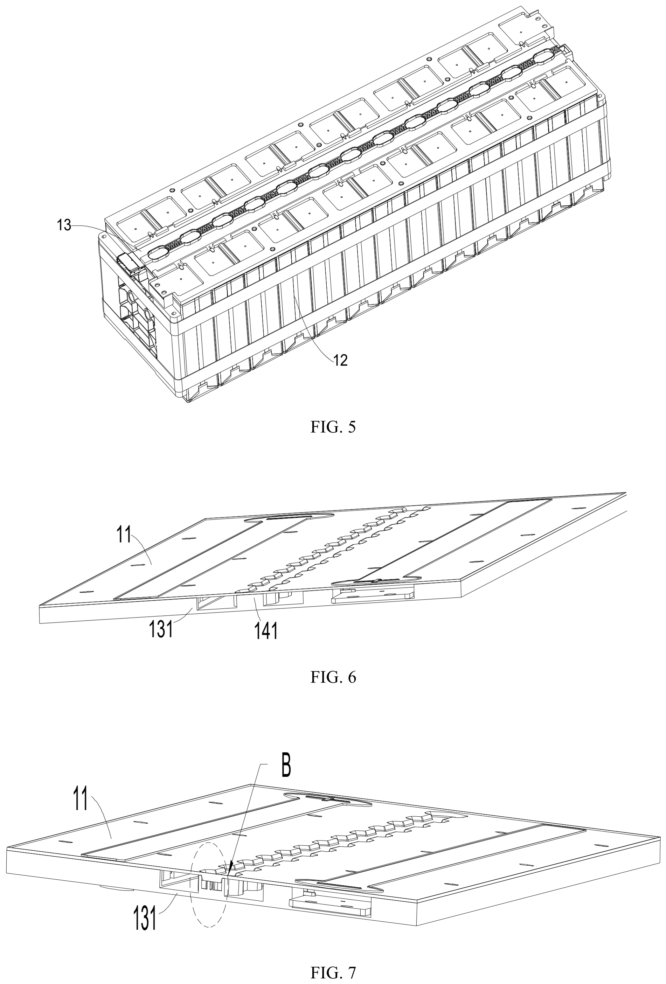

In one or more embodiments, as shown in FIG. 6 to FIG. 11, the insulation plate 131 further includes a plurality of limiting portions 1313 distributed at intervals. The cover plate 11 further includes a plurality of matching portions 112 distributed at intervals. The matching portions 112 may be matched with the limiting portions 1313.

In some embodiments, through the cooperation between the matching portion 112 and the limiting portion 1313, it is beneficial to improving the firmness of the cover plate 11 and the insulation plate 131 enclosing the pressure-relief channel 14, improving the reliability of the high-pressure gas and the particles passing through the pressure relief exhaust along the pressure relief, thus reducing the risk of the contact between the high-temperature gas and the particles and the electrical component disposed in the battery device, and thereby improving the electrical safety.

In one or more embodiments, as shown in FIG. 9 to FIG. 11, one of the limiting portion 1313 and the matching portion 112 is a protrusion, and the other is a recess, where the limiting portion 1313 and the matching portion 112 may be clamped in interference, thereby further improving the stability of connection between the cover plate 11 and the insulation plate 131, and additionally, the simple structure and reliable connection of the protrusion and the recess is beneficial to reducing the production difficulty and the cost.

In some embodiments, the limiting portion 1313 is a protrusion, while the matching portion 112 is a recess. In some embodiments, the limiting portion 1313 is a recess, while the matching portion 112 is a protrusion.

Therefore, the first connecting portion 111a is clamped with the through hole 1311a. The second connecting portion 111b is clamped with the body 1311b. The limiting portion 1313 is clamped with the matching portion 112. That is, by the three groups of clamping structures, it is beneficial to greatly reducing the risk of the cover plate 11 from being flushed away from the insulation plate 131 by high-temperature and high-pressure gas and particles.

In some embodiments, one of the cover plate 11 and the insulation plate 131 may be provided with an elastic hook (not shown in the drawings), and the other may be provided with a recessed structure matched with the elastic hook, which is beneficial to further improving the connection stability between the cover plate 11 and the insulation plate 131.

Embodiments of the present disclosure further provide an energy storage system, which includes the battery device according to any one of the above embodiments.

When used in the energy storage system, the battery device is configured to store energy. When the battery device experiences the thermal runaway, the high-temperature and high-pressure gas and particles in the cell 12 are instantly sprayed out of the explosion-proof valve 15 and flow into the pressure-relief channel 14. Along the first direction X, one end of the pressure-relief channel 14 is configured to be a closed end 141, and the other end of the pressure-relief channel 14 is configured to be an open end 142, thereby enabling the high-temperature and high-pressure gas and particles to flow towards the open end 142 provided with no electrical component along the first direction and to be discharged out, further reducing the risk of the flushed high-temperature and high-pressure gas and particles being discharged to an electrical component close to the closed end 141, avoiding the risk of short circuit, failure and damage to the electrical component under the impact of the high-temperature and high-pressure gas and particles, thus reducing the risk of fire, explosion and the like in the energy storage system, and improving the electrical safety of the energy storage system.

Embodiments of the present disclosure further provide an electrical equipment, which includes the battery device according to any one of the above embodiments.

When used in the electric equipment, the battery device provides electric energy for the electric equipment. When used in the electric equipment, the battery device is configured to store energy. When the battery device experiences the thermal runaway, the high-temperature and high-pressure gas and particles in the cell 12 are instantly sprayed out of the explosion-proof valve 15 and flow into the pressure-relief channel 14. Along the first direction X, one end of the pressure-relief channel 14 is configured to be a closed end 141, and the other end of the pressure-relief channel 14 is configured to be an open end 142, thereby enabling the high-temperature and high-pressure gas and particles to flow towards the open end 142 provided with no electrical component along the first direction and to be discharged out, further reducing the risk of the flushed high-temperature and high-pressure gas and particles being discharged to an electrical component close to the closed end 141, avoiding the risk of short circuit, failure and damage to the electrical component under the impact of the high-temperature and high-pressure gas and particles, thus reducing the risk of fire, explosion and the like in the electric equipment, and improving the electrical safety of the electric equipment.

The foregoing descriptions are merely specific implementations of embodiments of the present disclosure, but the protection scope of embodiments of the present disclosure is not limited thereto. Therefore, the protection scope of embodiments of the present disclosure should be based on the protection scope of the claims.

## Claims

1. A battery device, comprising at least one battery module (1), wherein the battery module (1) comprises:
an electrical component;
a cover plate (11);
a plurality of cells (12) each including an explosion-proof valve (15) arranged on top;
a cells contact system (13) comprising an insulation plate (131), wherein one of the insulation plate (131) and the cover plate (11) is provided with a recessed channel (1311), another one of the insulation plate (131) and the cover plate (11) is provided with a protruding channel (111), the recessed channel (1311) is engaged with the protruding channel (111) to enclose a pressure-relief channel (14), the insulation plate (131) is provided with a plurality of through holes (1311a) at intervals along a first direction (X).

2. The battery device according to claim 1, wherein, the plurality of through holes (1311a) are communicated with the pressure-relief channel (14), and the plurality of through holes (1311a) cover the explosion-proof valve (15) along a second direction (Y), and
wherein along the first direction (X), one end of the pressure-relief channel (14) is a closed end (141), another end of the pressure-relief channel (14) is an open end (142), and the electrical component is located on a side of the closed end (141) away from the open end (142)

3. The battery device according to claim 2, wherein the cover plate (11) is provided with the protruding channel (111), the insulation plate (131) is provided with the recessed channel (1311), the recessed channel (1311) comprises a body (1311b) and the through holes (1311a) communicating with the body (1311b), along the first direction (X), one end of the recessed channel (1311) is provided with a baffle wall (1311c), another end of the recessed channel (1311) penetrates through the insulation plate (131), one end of the protruding channel (111) close to the baffle wall (1311c) is closed, and anther end of the protruding channel (111) penetrates through the cover plate (11).

4. The battery device according to claim 3, wherein the protruding channel (111) at least comprises a first connecting portion (111a), and an outer contour of the first connecting portion (111a) is arc-shaped, so that the first connecting portion (111a) is clamped with the through hole (1311a).

5. The battery device according to claim 4, wherein the protruding channel (111) further comprises a second connecting portion (111b) integrally formed with the first connecting portion (111a), and an outer contour of the second connecting portion (111b) matches an outer contour of the body (1311b), so that the second connecting portion (111b) is clamped with the body (1311b).

6. The battery device according to claim 3, wherein the insulation plate (131) further comprises an insulation portion, the insulation portion is located in the through hole (1311a), and the insulation portion is configured to block particles from falling to top of the cell (12) without thermal runaway.

7. The battery device according to claim 6, wherein the insulation portion is a baffle (1312), along the first direction (X), the baffle (1312) comprises a first end (1312a) and a second end (1312b), the first end (1312a) is located on a side of the second end (1312b) facing the closed end (141), the first end (1312a) is fixedly connected to an inner wall of the through hole (1311a), and the second end (1312b) is movably connected to the inner wall of the through hole (1311a).

8. The battery device according to claim 7, wherein arc-shaped holes (1312c) are distributed at intervals at a junction between the second end (1312b) and the through hole (1311a).

9. The battery device according to claim 7, wherein along the second direction (Y), the baffle (1312) is obliquely arranged, so that the second end (1312b) is located on a side of the first end (1312a) facing away from the explosion-proof valve (15).

10. The battery device according to claim 9, wherein along the second direction (Y), an included angle θ is formed between the first end (1312a) and the second end (1312b), where 1°≤θ≤3°.

11. The battery device according to claim 6, wherein the insulation portion is an insulation net (1314) connected to an inner wall of the through hole (1311a).

12. The battery device according to any one of claims 3 to 11, wherein the body (1311b) comprises a Tesla valve protrusion (1311d) along the first direction (X), so that gas and particles in the pressure-relief channel (14) are discharged from the closed end (141) toward the open end (142).

13. The battery device according to claim 12, wherein along the second direction, a size of a recess of the recessed channel (1311) located at the body (1311b) is H1, and a size of the Tesla valve protrusion (1311d) is H2, and a ratio of H2 to H1 is in a range of 0.5≤H2/H1≤1.

14. An energy storage system, comprising the battery device according to any one of claims 1 to 13.

15. An electric equipment, comprising the battery device according to any one of claims 1 to 13.
